# EUROPEAN PATENT APPLICATION

(11) **EP 4 151 345 A1**
(43) Date of publication of application: **22.03.2023**
(21) Application number: 21198117.0
(22) Date of filing: 21.09.2021
(51) Int. Cl.: B23B 29/20, B23B 29/24, B23Q 3/12, B23Q 5/04, F16D 1/10

(54) **TOOL HOLDER INTERFACE OF A MACHINE TOOL, TOOL TURRET AND TOOL HOLDER FOR LIVE TOOLS**

(71) Applicant: Gildemeister Italiana S.r.l., 24030 Brembate di Sopra (BG) (IT)
(72) Inventor: PASSERINI, Mirko, 20083 Gaggiano (IT); CHIAPPA, Claudio, 24030 Villa d'Adda (IT); MILESI, Luca, 24015 San Giovanni Bianco (IT)
(74) Representative: MERH-IP Matias Erny Reichl Hoffmann Patentanwälte PartG mbB

(57) **Abstract**

A tool turret comprises a turret body having at least one connecting slot for replaceably mounting a tool holder TH to the tool turret and a transmission shaft S arranged at the connecting slot. The transmission shaft S is configured to transmit a drive torque to the mounted tool holder TH. The transmission shaft S has a torque receiving-side section S2 for receiving driving torque and a connecting-side section S3 for connecting to the mounted tool holder TH. The connecting-side section S3 has a first gearing S4 for transmitting the drive torque to a corresponding tool holder gearing TH3, wherein at the torque receiving-side section S2 a contacting part is provided for receiving the torque of the drive unit. A mating surface is provided at the connecting-side section (S3) of the transmission shaft S and the mating surface is arranged to contact to a surface of the mounted tool holder TH for interacting with the tool holder TH to remove a gap between the first gearing S4 and the corresponding mounted tool holder gearing TH3.

## Description

The present application relates to an optimized tool holder interface of a machine tool, in particular a tool holder coupling mechanism of a tool turret coupling a tool holder for a live tool. Moreover, an optimized tool holder for live tools and an optimized tool turret torque transmission are proposed.

EP 1952921 A2 describes a revolving turret for a machine tool, in particular for a single spindle lathe. The turret disc is operatively coupled to rotative driving means for controllably rotative driving the disc and the machining tools. Between a contoured end portion of an automatic machining tool holder support and a recess formed in an extension of a driving gear wheel is arranged an exchangeable insert including an insert recess for receiving said contoured end portion, and that said insert includes, on a side thereof opposite to said recess, an insert stem which can be coupled, by a geometrical type of coupling, to said recess of said driving gear wheel extension.

Moreover, US 2016/0229012 A1 describes a machine tool which includes: a lower tool rest on which a plurality of tools is mounted; a motor provided at the lower tool rest, for rotating a rotating tool when the rotating tool is mounted on the lower tool rest; and a tool holder attached to the lower tool rest, for detachably holding the tool. The tool holder has a clamping mechanism portion operating between a clamping state of clamping the tool and an unclamping state of unclamping the tool, as a result of transmission of motive power generated at the motor. With such a configuration, the clamping mechanism portion for automatically clamping and unclamping the tool held in the tool holder on the tool rest is provided.

For performing precise workpiece machining operations, it is required to have maximum precision when operating the tools. Therefore, one important aspect is the transmission path of the driving force, from the drive (especially the tool holder drive for live tools) up to the mounted live tool. Conventional machine tools use gearings for transmitting and/or converting the driving torque from the drive source (e.g. drive motor) to the mounted tool for machining operations. Some torque transmission paths which include gearings, however, have a reduced precision due to gaps occurring at intersections of intermeshing gear wheels. Moreover, also transmission delays may occur during the transmission and/or conversion of the rotation from the driving torque source to the mounted tool.

An object of the present invention is to solve the aforementioned problems, and to provide a tool holder interface and/or a tool turret of a machine tool with which a transmission with higher accuracy can be achieved. Moreover, it is another object to provide an optimized tool holder for live tools which is suitable for improved torque transmission for higher machining precision. It is also an object to provide a method for improving the connecting process of a tool holder with a tool holder interface of a machine tool, for achieving higher machining precision.

To solve the problems the features of the independent claims are suggested. Preferred developments are in the dependent claims.

A tool turret of a machine tool may comprise a turret body having at least one connecting spot for replaceably mounting a tool holder to the tool turret and a transmission shaft (i.e. rotating and axially moving/sliding shaft) arranged at the connecting spot. The transmission shaft may be configured to transmit a drive torque from a spindle shaft to the mounted tool holder. The transmission shaft may have a torque receiving-side section for receiving driving torque (indirectly or preferably directly) form the spindle shaft or directly from a torque source such as a drive motor (preferably live tool holder drive integrated into the tool turret) and a connecting-side section for connecting to the tool holder which is mounted directly at the tool holder interface of the tool turret. Preferably the tool turret is axially movable in one plane and also rotatable around a B axis. The connecting-side section may have a first gearing or first toothing for transmitting the received drive torque to a corresponding tool holder gearing which may be referred to as the torque-receiving toothing of the tool holder for receiving the driving torque for driving the tool for machining operations. The torque receiving-side section may have a contacting part (e.g. inner surface of a hollow spindle shaft) for receiving the torque from the drive unit (preferably directly), wherein at the connecting-side section of the transmission shaft a mating surface may be provided. The mating surface may be arranged to contact to a surface (corresponding mating surface) of the mounted tool holder for interacting with the tool holder to remove a gap or space between the first gearing and the corresponding gearing of the mounted tool holder, i.e. torque-receiving toothing of the tool holder. By providing this specific structure a higher accuracy of machining operations can be achieved by removing a gap between intermeshing gearing with an effective design which can be efficiently manufactured. Accordingly, also the torque can be transmitted without a time lag.

The transmission shaft of the tool turret may be axially movable. Preferably the axial movement of the transmission shaft can be provided for allowing an engagement or disengagement of the drive torque. Accordingly, a higher degree of freedom of movement and higher precision of a transmission shaft movement can be achieved when connecting the tool holder to the tool holder interface.

The transmission shaft may have a connecting-side section, which has a front opening on an outer end surface on the connecting-side section for receiving a tool holder shaft along an axial direction of the transmission shaft. The tool holder shaft may be inserted into the opening for engaging with the transmission shaft and for mounting of the tool holder in an efficient manner.

The mating surface may preferably be axially inclined to contact the corresponding outer contact surface of the tool holder for shifting or rotating the tool holder such as to remove a gap or space between neighbouring teeth of the first gearing and the corresponding tool holder gearing (also referred to as gearing gap) when inserting the tool holder shaft along the axial direction.

Preferably the connecting-side section may have a sleeve fitting or mounting hole (also referred to as opening) integrated at the transmission shaft for connecting to the tool holder shaft, the sleeve including a connecting front surface and a sleeve inner surface, wherein on the sleeve inner surface the first gearing may be provided.

The connecting-side section may be a hollow protrusion of the transmission shaft having the opening for connecting to the tool holder shaft. The hollow protrusion may include a front surface and an inner surface and on the inner surface the first gearing may be provided.

The fitting of the connecting-side section may have at least one slot or front tooth (preferably a guide tooth) for connecting to a corresponding front tooth or slot of the mounted tool holder for interacting with the tool holder to remove a gap between the first gearing and the tool holder gearing. By providing this specific structure a higher accuracy of machining operations of a workpiece can be achieved.

Preferably the slot of the sleeve may be extending in an axial direction along the transmission shaft and may be arranged on a circumferential side of the transmission shaft. Moreover, a slot side surface in the connecting-side section may have an inclination. By providing this specific structure a higher accuracy of machining operations of a workpiece can be achieved.

Preferably the matingsurface is inclined along an axial direction of the transmission shaft such that an angle between the mating surface and the longitudinal axis of the transmission shaft is between 0 and 90 degrees, preferably larger than 10 degrees and smaller than 80 degrees which showed the results with highest effectivity for removing the gearing gap. The angle is preferably the inside angle (or inner angle, or the smallest angle) between the mating surface and the axial direction of the transmission shaft.

Preferably the mating surface may be a side surface of the slot or front tooth on an end surface of the transmission shaft and the slot or front tooth may be arranged to extend at the circumference of the transmission shaft to an outer surface of the transmission shaft.

In a further preferrable development the slot side surface of the connecting-side section may have a curved surface as the mating surface.

Preferably the connecting-side section of the transmission shaft may have an opening on an outer end surface for receiving the tool holder shaft and the receiving side section may be spaced apart from the connecting side section, and arranged on an opposite side on the transmission shaft. Accordingly, the connecting side section and receiving side section may be arranged on opposing sides which are end side surfaces of the transmission shaft for smooth torque transmission via the transmission shaft.

The first gearing of the transmission shaft may be configured for intermeshing with a corresponding surface of the tool holder gearing to transmit a drive torque.

Preferably at the torque receiving-side section at least one pin (most preferably two pins) is arranged movable along an axial direction in a hole or through -hole of the transmission shaft. The pin is preferably configured to move in the direction radially outside at least partially due to a centrifugal force and or spring force in order to be pressed against a contact-surface of a notch of a mounting part or transmission part of the tool turret when the transmission shaft is rotating. The pin being pressed against at least an inclined surface or side surface of an inner surface of the notch in order to achieve a rotation of the transmission shaft and the respective gear to reduce the gearing gap preferably to zero and therefore achieve lag free torque transmission.

At least one pin may be arranged in a hole of the transmission shaft and wherein a pin may be configured to move in the direction radially outside (engaged state) in order to be pressed against a contact-surface of a transmission part of the tool turret during rotation of the transmission shaft. Preferably the force for pressing the pin outside against the contact surface is caused, at least partially, by the centrifugal force due to the rotation of the shaft and therefore the force increases with increased rotation speed.

Preferably the pin is contacted to a spring (preferably a coil spring arranged at the center of the shaft connected to two opposing pins arranged on opposite end of the spring) for pressing the outer surface of the pin radially outward. The pin having an inclined surface along an axial direction of the pin and the inclined surface preferably is a surface for contacting a contact-surface of the transmission part of the tool turret. Preferably the pin is a cylinder with a tapered or chamfered end forming the inclined surface.

Preferably the transmission shaft is mounted to be movable along the axial direction and a torque receiving-surface of the torque receiving-side section is preferably configured to be in friction contact with a corresponding surface of a tool turret part in an axially shifted state of the transmission shaft in order to receive the drive torque from the drive unit of the machine tool and in a non-shifted state allow rotation of the transmission shaft independent of the tool turret part. A transmission-surface of the connection side-surface may be in friction contact with a corresponding surface of the tool holder gearing to transmit the drive torque.

Preferably, in order to be movable in the axial direction, the transmission shaft is supported at a supporting part allowing a movement in the axial direction. The supporting part is preferably a pair of freewheels, and each freewheel of the pair of freewheels has an inner ring and an outer ring concentric with the inner ring and a plurality of latching bodies (which may preferably be ball-shaped) between the rings, the latching bodies releasing the relative rotation between the inner and outer ring in a first rotation direction and provide form fit or friction fit in the other rotation direction to block the rotation. Preferable the transmission shaft is supported at the inner rings of the free wheels and the tool turret part is (preferably fixedly) connected to the outer rings.

The transmission shaft may be a spindle shaft of the tool turret. The transmission shaft may be a multicomponent shaft in which several separate parts are combined to a single shaft.

Furthermore, a tool holder for a tool turret of a machine tool, in particular a lathe, may be configured to mount a tool at the tool turret for machining operations. The tool holder may have a tool holder shaft which is arranged at a connecting section of the tool turret, wherein the tool holder shaft may be configured to receive a drive torque, an axially movable ring connected with the tool holder shaft and an elastic element at the rear end of the ring. A tool holder gearing may be placed at the tool holder shaft for receiving the drive torque from a corresponding first gearing of the connecting-side section. A front section of the tool holder shaft may have a mating surface and the mating surface may be arranged for contacting a surface of the connecting-side section for interacting with the transmission shaft to remove a gap between the tool holder gearing and the first gearing.

In a further development, a tool holder for a tool turret of a machine tool, in particular a lathe, may be configured to mount a tool at a tool holder interface of the tool turret for machining operations. The tool holder may include: a tool holder shaft to be arranged at a connecting-side section of the tool holder interface when mounted, wherein the tool holder shaft is configured to receive a drive torque, an axially movable ring arranged at the tool holder shaft; an elastic element at the rear end of the ring for pressing the ring in an axially outward direction, the elastic element preferably being a spring. At the tool holder shaft a tool holder gearing for receiving the drive torque from a corresponding first gearing of the connecting-side section may be provided and at a front section of the tool holder an outer contact surface may be provided and the outer contact surface may be arranged for contacting a mating surface of the connecting-side section for interacting with the transmission shaft to remove a gap between the tool holder gearing and the first gearing, and preferably remove a gap of a gearing between the tool holder shaft and the ring.

The ring of the tool holder may have a front tooth or a front slot for connecting to a corresponding front slot or a front tooth of a sleeve of a connecting-side section for interacting with the transmission shaft to remove a gap between the first gearing and the tool holder gearing. By providing this specific structure a higher accuracy of machining operations of a workpiece can be achieved.

Preferably the outer contact surface is a surface of a front tooth or a front slot of the ring for connecting to a corresponding slot or a front tooth of the connecting-side section to interact with the transmission shaft to remove a gap between the first gearing and the tool holder gearing. Accordingly, either the ring may have a front tooth for connectingto a slot of the connecting side section of the shaft or vice versa. In a further development the ring may have both, a front tooth for connecting to a corresponding slot of the shaft and a slot for connecting to a front tooth of the shaft.

Preferably, the ring may be arranged to surround the tool holder gearing of the tool holder shaft, and the ring may be configured to be pressed against the elastic element when the tool holder shaft is moved into an opening of the connecting-side section of the tool holder interface for mounting the tool holder, when the outer contact surface is moved or pressed against the mating surface of the connecting-side section.

According to the aspects of the structure of the turret and the tool holder, higher accuracy for machining operations of a workpiece can be achieved.

Those skilled in the art will appreciate that various adaptations, modifications, and/or combination of the just described aspects can be configured. Therefore, it is to be understood that, further aspects may be practiced other than as specifically described herein. Those skilled in the art will also appreciate, in view of this disclosure, that different aspects described herein may be combined to form other aspects of the present disclosure.

### BRIEF DESCRIPTION OF THE DRAWINGS

- **FIG. 1**: exemplary illustrates a schematic perspective view of a tool holder coupled to a driving shaft of a tool turret;
- **FIG. 2**: exemplary illustrates the cross-sectional view of the tool holder coupled to the driving shaft of the tool turret;
- **FIG. 3a**: exemplary illustrates the detailed view of the corresponding gearing of the tool holder and the transmission shaft as in FIG. 1;
- **FIG. 3b**: exemplary illustrates the detailed view of the ring and the tool holder structure with the ring;
- **FIG. 4a**: exemplary illustrates the cross-section view of the tool holder and the transmission shaft in an uncoupled state;
- **FIG. 4b**: exemplary illustrates the side view of the tool holder and the transmission shaft in an uncoupled state;
- **FIG. 5a**: exemplary illustrates the cross-section view of the tool holder and the transmission shaft;
- **FIG. 5b**: exemplary illustrates the side view of the tool holder and the transmission shaft in the coupled state;
- **FIG. 6a**: exemplary illustrates an intermeshing gearing between the tool holder and the ring with a gap;
- **FIG. 6b**: exemplary illustrates an intermeshing gearing between the tool holder and the transmission shaft with a gap
- **FIG. 7**: embodiment illustrates the cross-section view of the tool holder and the transmission shaft in the uncoupled state;
- **FIG. 8**: embodiment illustrates the side view of the tool holder and the transmission shaft in an uncoupled state;
- **FIG. 9a**: embodiment illustrates an intermeshing gearing between the tool holder ring and the tool holder;
- **FIG. 9b**: embodiment illustrates an intermeshing gearing between the tool holder and the transmission shaft without a gap between intermeshing surfaces;
- **FIG. 10**: embodiment illustrates the cross-section view of the tool holder shaft and the transmission shaft in the coupled state;
- **FIG. 11**: embodiment illustrates the side view of the tool holder and the transmission shaft in the coupled state including detailed views of the intermeshing gearing having the zero gap configuration;
- **FIG. 12a**: a schematic connection between a tool holder, a ring and a transmission shaft in an uncoupled state of an embodiment;
- **FIG. 12b**: a schematic connection between a tool holder, a ring and a transmission shaft in a coupled state of the embodiment;
- **FIG. 13**: cross section view of a tool holder and a transmission shaft with pins arranged in openings at the transmission shaft according to an embodiment;
- **FIG. 14**: cross section view of a tool holder and a transmission shaft with pins arranged in openings at the transmission shaft according to an embodiment;
- **FIG. 15**: a side view of a tool holder and a transmission shaft with a hole inside of the tool turret according to another embodiment;
- **FIG. 16**: a section view of pins arranged in openings at the transmission shaft;
- **FIG. 17**: a section view of the transmission shaft of another embodiment having free wheels and in which the shaft is axially displaced to be in an non-engaging state;
- **FIG. 18**: a section view of the transmission shaft of another embodiment in which the shaft is axially displaced to be in an engaging state to have friction contact for transmitting the drive torque;
- **FIG. 19**: a section view of a free wheel of an embodiment;

### DETAILED DESCRIPTION

In the following, preferred aspects and embodiments will be described in more detail with reference to the accompanying figures. Same or similar features in different drawings and embodiments are referred to by similar reference numerals. It is to be understood that the detailed description below relatingto various preferred aspects and preferred embodiments are not to be meant as limiting the scope of the present invention.

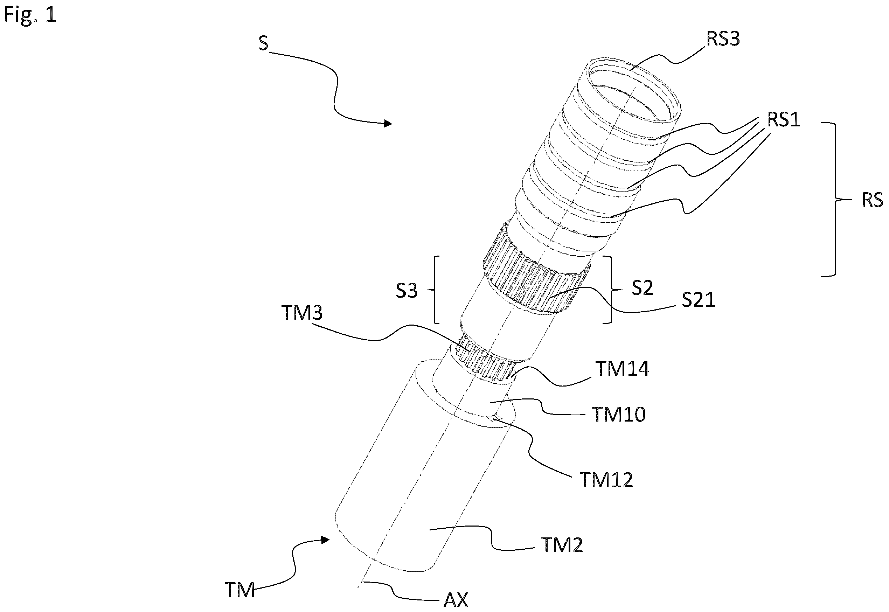

In figures 1 to 6 a configuration of a torque transmission shaft (i.e. rotating and axially moving shaft) and a corresponding tool holder of a machine tool are shown. For transmission of the rotary movement and the torque, respective gearings are provided.

In known systems the problem arises that for high precision machining operations inaccuracies occur due to gaps and lags occurring in the torque transmission path, i.e. the path the torque is transmitted from the torque generating source, which may preferably be an internal drive motor (live tool holder drive) of a tool turret, to the final torque receiving part which is in the end the machining tool or live tool for machining operations. When the drive motor receives the start signal, rotation and torque generation is initiated and the movement and torque is transmitted along the torque transmission path. Due to delays and gaps along the path a lag and/or change of the torque occurs leading to a deviation of the desired torque and/or rotation timing at the live tool from the actual torque and rotation timing. This deviation is particularly relevant when changing the rotation speed or at the start of a machining operation. Accordingly, an efficient solution for reducing this deviation is proposed and therefore a structure which can significantly increase the machining accuracy while at the same time the manufacturing costs when manufacturing the tool turret and tool holder are also considered so as to allow an efficient production of the optimized torque transmission path.

In figure 1 a schematic perspective view of a connection between a tool holder TM ("to be mounted tool holder" TM) and a transmission shafts of a tool turret is shown. The transmission shaft is an integral part of the tool turret or machine tool, for transmitting the driving torque from the drive torque generating source, which is the integrated drive of the tool turret configured to drive live tools, to the tool holder connected to said transmission shaft. Considering the tool turret, a respective transmission shaft is integrated at preferably at each of the connection interfaces for mounting a respective tool holder. A tool turret is also described in DE 10 2005 021202 B3, which is herewith incorporated by reference. Accordingly, the receiving side of the transmission shaft to which the respective tool holder can be mounted, forms a tool holder interface for mounting the tool holder and at the same time allowing torque transmission.

The mounted tool holder TM is connected to the transmission shaft S along an axial direction, which is a direction parallel to a connection axis AX. Accordingly, both the mounted tool holder TM and the transmission shaft, which are arranged parallel to each other, have respective end sides provided for connecting these parts to each other such as to allow a torque transmission from the transmission shaft S to the tool holder TM and the mounted tool. To achieve torque transmission and transmission of the rotary movement from the shaft to the tool holder, gearings are provided which are capable of being slid into each other for intermeshing. To allow the sliding movement of the gearings, a space is provided between the corresponding teeth of the inner and outer gearing.

The tool holder TM is provided for holding a tool, especially a live tool, and for transmission the drive torque received from a transmission shaft S of the tool turret to the tool for machining operations. A tool holder body TM2 is provided which is a circular shaped body extended along the axial direction. Although in the present example the outer shape of the tool holder body TM2 is a circular shape, said shape may also be an quadratic, polygonal or ellipsoid shape, selected based on the required shape of the tool holder TM.

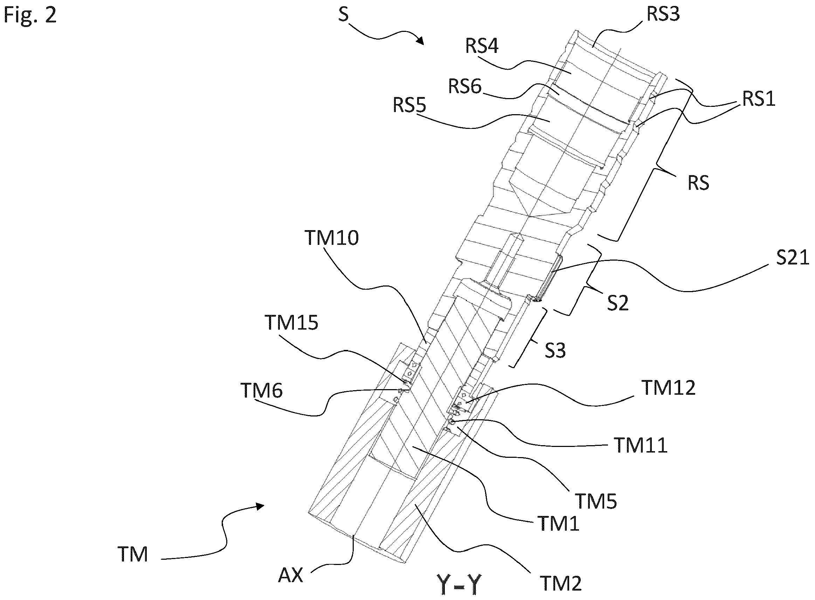

The tool holder (outer) body TM2 has a radial hollow portion TM5, as shown in figure 2, said hollow portion is provided to extended radially from a through hole at the center of the tool holder body TM2, to provide a chamber inside the tool holder body TM2 for arranging therein a spring and providing a moving space for a rear end tooth (ring rear connection protrusion TH12) of the ring TM10. Also, a hollow shaft portion TM6 is provided, as a hollow portion of the tool holder shaft TM1, more specifically between the outer circumferential surface of the tool holder shaft TM1 in the central part thereof and the tool holder gearing TM3. The radial hollow portion TM5 extends radially from the inner side of the tool holder body TM2 and is provided for a position of the elastic element, in particular a spring TM11. Moreover, a slot is provided on the front end of the tool holder body TM2 for connecting with the ring TM10 through a ring rear connection protrusion TH12.

The tool holder shaft TM1 is a cylinder arranged in the inner through hole of the tool holder body TM2, being slidably guided in said through hole to allow an axial movement of the tool holder shaft TM1 along the axial direction. The axial movement of the tool holder shaft TM1 allows the tool holder to intrude into the corresponding opening of the tool holder interface of a tool turret for connecting said tool holder to said tool turret. A part of the tool holder shaft TM1 is always located inside the through hole of the tool holder body TH2, providing efficient support. The tool holder gearing TM3 is provided on a front-end outer surface of the tool holder shaft TM2, in the direction of a connecting side section S3 of the transmission shaft S of the tool turret. Moreover, the tool holder gearing TM3 is an gearing provided on an outer circumference of the tool holder shaft TM2 which can be slid into the gearing S4 provided on an inner circumference of the opening of the transmission shaft S. The end opposing the end at which the tool holder gearing TM3 is provided may also be referred to as the back end of the tool holder shaft TM1 and said end can be configured to be connected to a tool (not shown), in particular a live tool.

A hollow shaft portion TM6 or shaft hollow grove is provided on the outer side surface of the tool holder shaft TM1 for achieving radial free space allowing an improved axial movement of the spring and the ring TM10. The shaft hollow grove TM6 and the radial hollow portion (or radial cavity of the tool holder body) TM5 are positioned to face each other. This arrangement is used for positioning the elastic element, in particular the spring TM 10, in the resulting space.

The ring TM10 is provided on the front-end outer portion of the tool holder shaft TM1, on the tool holder gearing TM3, to be slidably movable in an axial direction. The ring TM10 has the shape of an axially extended cylindrical bush with an axial through hole arranged in the center for connecting with the tool holder shaft TM1 and particularly the tool holder shaft gearing TM3. The ring TM10 is supported by the inner side surfaces (facing radially inward) of the front opening of the tool holder body TM2 to be axially movable. Said inner side surfaces of the tool holder body TM2 are in contact with the outer circumferential surface (ring outer surface TM17) of the ring TMIO and on the circumference there is provided a tooth-slot for allowing axial movement of a rear tooth or ring rear connection protrusion TM12. The side surfaces of the tooth-slot block the rear tooth such as to block a rotation of the ring TM10 around the axis AX. For allowing a rotation the rear tooth can be moved axially out of the tooth-slot. The ring rear connection protrusion TM12 is provided on an outer end side surface of the ring TM10 extending in radial direction and arranged opposite to a ring gearing (ring gearing TM13) arranged on an inner circumferential side of the ring TM10. The ring rear connection protrusion TM12 is designed to couple with the radial hollow portion TM5 of the tool holder body TM2, in a key - groove arrangement. The plane at the front-end surface of the ring TH10 is preferably perpendicular to a connection axis AX and the ring gearing TH13 is provided at the inner side of the ring TH10, i.e. internal gearing.

The spring TM11 is located at the rear end of the ring TM10, opposite to the connecting end side of the ring TM10. Said spring TM11 is arranged in the radial hollow portion TM5 of the tool holder body TM2. Due to the axial movement of the ring TM10 when inserting the tool holder shaft TM1 into the corresponding opening of the transmission shafts, the spring TH10 can be pressed, by the ring rear surface TM15 of the ring TM10, against the radial side surface of the radial hollow portion TM5, during the coupling of the tool holder with the transmission shaft S of the tool turret. Accordingly, during the step of inserting the too holder shaft into the opening of the transmission shaft, the ring TM10 contacts at the front end thereof with a contact surface of the transmission shaft in the end region of the connecting side section S3 so that the ring is pushed towards the tool holder body TM2 in the axial direction to compress the spring TM11. The ring gearing TM13 therefore slides along the tool holder gearing TM3 to the shaft hollow portion TM6.

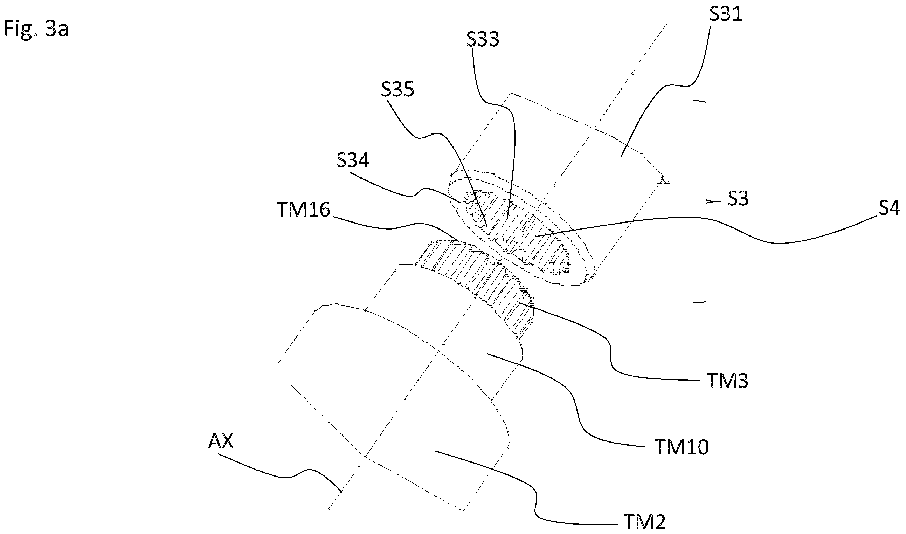

On the other side of the connection shown in figure 2, the transmission shaft S is provided, which is designed to transmit the driving torque from a motor (not shown) of the tool turret to the tool holder shaft TM1. For forming a tool holder interface at the tool turret, a connecting side section S3 is provided on a front end of the transmission shaft S, facing the tool holder to be mounted. The front end of the transmission shaft S is arranged to be closer to a connection-side with the tool holder shaft TM1 than to a rear end of the transmission shaft S at which preferably a torque receiving section is provided. The connecting side section S3 has a sleeve shaped protrusion with a front-end opening integrated into an end of the shaft, briefly referred to as sleeve S31 in the following, and said sleeve S31 is a cylindrical connection part arranged in the axial direction along the connection axis AX. The front-end opening extends in the axial direction along the connecting side section S3 and a first gearing S4 is provided at a sleeve inner surface S33 of the sleeve S31 for intermeshing connection with the tool holder gearing TM3 of the tool holder shaft TM1, as shown in figure 3a. Due to the arrangement of the first gearing on an inner circumferential surface of the opening of the shaft, said gearing may also be referred to as an internal gearing.

Furthermore, a torque receiving side section S2 is provided at an end side section of the transmission shaft S for receiving a driving torque from the tool motor (live tool holder drive) of the tool turret or machine tool via additional transmission elements or directly from in integrated motor. For example a torque receiving gearing S21 is provided on the torque receiving side section S2 for receiving the driving torque.

Moreover, a rear end section RS of the transmission shaft S is a part of the transmission shaft S, which is located at the rear end of the transmission shaft S opposite to the connecting side section S3. In a favourable development the torque receiving side section S2 is the same as the rear end section RS. The rear end section RS has a larger diameter than the diameter at the connecting side sections S3.

Furthermore, the rear end section RS has four rear end groves RS1 provided at the rear outer side surface of the transmission shaft S. A rear shaft opening RS3 is provided at the rear end of the transmission shaft S. The transmission shaft rear opening RS3 is extended axially and comprises several rear end inner side groves RS6. A first inner counter surface RS4 and a second inner counter surface RS5, having different diameters, are provided as inside surfaces of the rear shaft opening RS3 of the transmission shaft S.

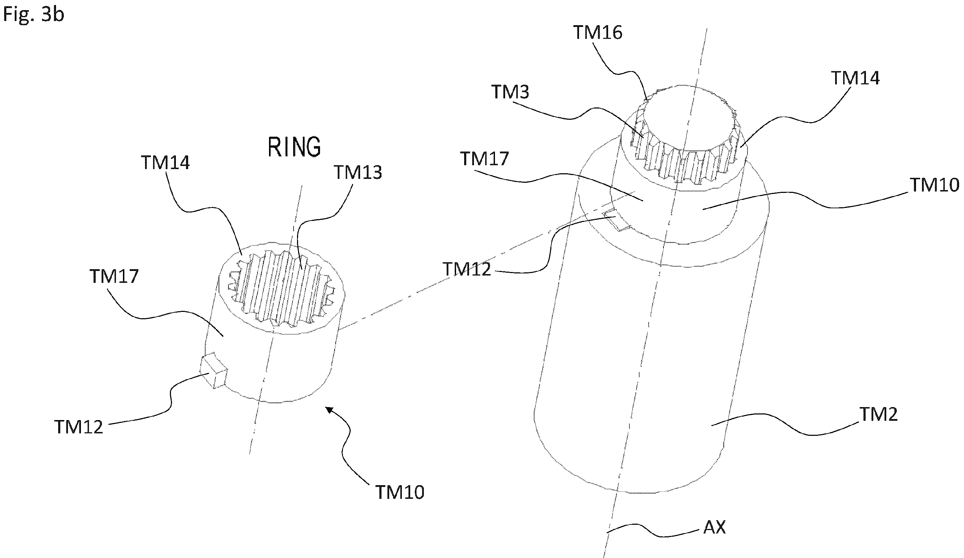

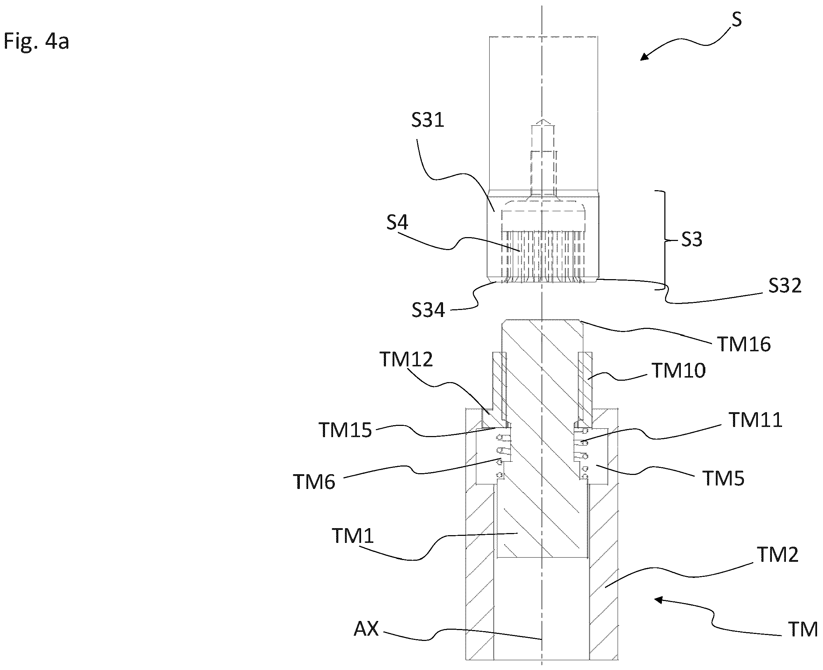

During a coupling procedure between the tool holder TM and the transmission shaft S, the transmission shaft S can also move in the axial direction along the connection axis AX, e.g. towards the tool holder shaft TM1. Accordingly, the tool holder gearing TM3 on the outer side surface of the tool holder shaft TM1 is sliding into the first gearing S4 of the transmission shaft S, i.e. internal gearing, for intermeshing. Furthermore, a connecting front surface S34 (see figure 3a and 4a) is provided at the front end of the sleeve S31 and is pressed against a ring connection surface TM14 (see figure 3b) of the ring TM10. A chamfered outer sleeve surface S32 is provided on the outside front edge of the sleeve for improved connection. The ring TM10 is pushed down along the connection axis AX through the ring connection surface TM14 up to a predetermined distance. A ring rear surface TM15 is pressed against the spring TM10, while the pressed ring TH10 is moved along the connection axis AX.

An enlarged view of the coupling portions between the transmission shaft S and the tool holder shaft TM1 is shown in Figure 3a. The tool holder TM comprises the tool holder body TM2, the ring TM10, the tool holder shaft TM1 having the tool holder gearing TM3. A tool holder gearing chamfered portion TM16, which is a chamfered portion of the edge section of the gearing, is provided at the front-end part of the tool holder gearing at the outer circumferential side. Said chamfered portion TM16 is provided for an optimized connection and engaging movement between the tool holder shaft (more particularly the tool holder gearing TM3) and the first gearingS4, which has also a chamfered edge portion S35 for improving the engaging process even further. The proposed chamfered end portions allow to avoid damaging of the gears and efficiently improves mounting steps of mounting the tool holder.

Furthermore, the connecting side section S3 is shown in Figure 3a. Said connecting side section S3 includes the sleeve shaped protrusion with a front-end opening integrated into an end of the shaft, briefly referred to as the sleeve S31 which is designed to be coupled with the tool holder gearing TM1 and for intermeshing with the tool holder gearing TM3. The first gearing S4 is provided at the sleeve inner surface S33. The front-end part of the first gearing S4 is chamfered to create a first gearing chamfered edge portion S35 in order to avoid a potential damage to the gearing during the coupling operation. Moreover, during the coupling operation the connecting side front surface S34, which is a surface arranged perpendicular to the axial direction, is pressed against the ring connection surface TM14 to push the ring inward into the tool holder body TM2. Both of these surfaces are preferably provided without any protrusions or slots but are flat surfaces arranged parallel to each other for a solid contact and perpendicular to the connection axis AX.

The detailed structure of the ring TM10 is shown in figure 3b. At least one protrusion, the ring rear connection protrusion TM12, is arranged on a ring outer surface TM17 at the rear end of the ring TM10 and extending in radial direction and arranged opposite to the ring gearing (ring gearing TM13) arranged on an inner circumferential side of the ring TM10. The ring rear connection protrusion TM12 is designed to couple with the radial hollow portion TM5 of the tool holder body TM2. Moreover, the ring rear connection protrusion TM12 may the shape of an rectangle extended in the radial direction outward from the ring outer surface TM17. The ring gearing TM13 is provided at the ring inner surface, facing towards the longitudinal axis of the ring and therefore facing inwards. The ring gearing TM13 is suitable for intermeshing with the tool holder gearing TM3, which is arranged to face in a direction radially outwards. The ring TM10 is slidably movable on the tool holder gearing TM3 and can slide into the opening of the tool holder body TM2.

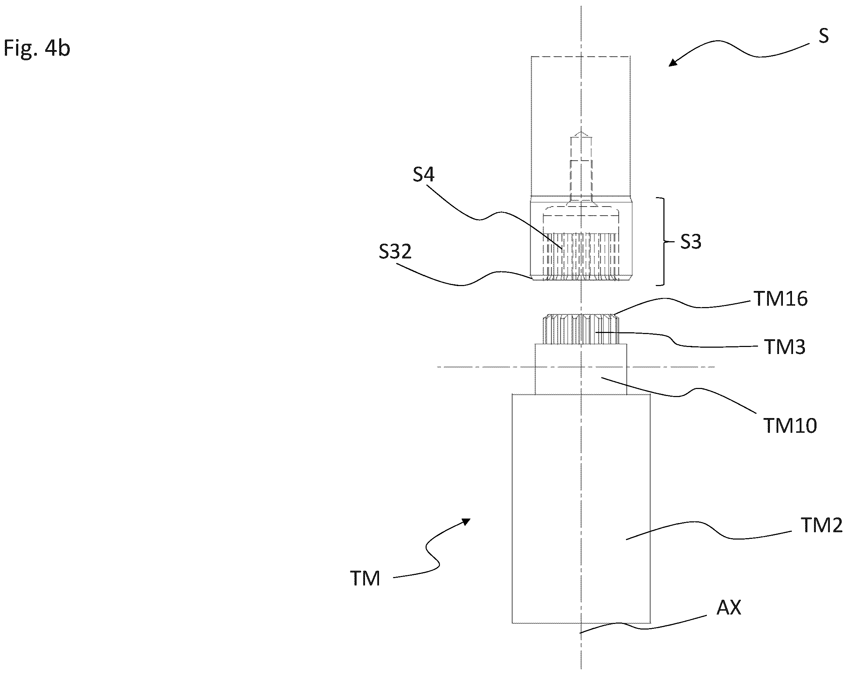

Figures 4a and 4b show the tool holder TM and the transmission shaft S in the uncoupled position in a side view and a cross section side view of the coupling parts. For the coupling process, first the tool holder gearing chamfered portion TM16 is moved axially (along axis AX) in the direction to the connecting side front surface S34 of the transmission shaft S. Accordingly the tool holder gearing chamfered portion TM16 will enter the opening of the transmission shaft and contact at least partially the chamfered edge portion S35 such that the teeth of the tool holder gearing TM3 in the area of the tool holder gearing chamfered portion TM16 slide into the clearance (or interspace) between neighbouring teeth of the first gearing S4. Accordingly, the tool holder shaft TM1 slides into the opening of the transmission shaft at the connecting side section S3, in other words slides into the opening of the sleeve S31. After the tool holder shaft TM1 has entered into the opening of the sleeve S31 and the gearings (S4 and TM3) slide axially along each other for intermeshing, the overlapping section between the tool holder shaft TM1 and the transmission shaft S increases. After a predetermined section of the tool holder shaft TM1 is inserted into the opening, a ring movement point occurs. Accordingly, in the next step of the coupling process, the ring movement step, occurs. Said step is initiated by the contact between the connecting side front surface S34 with the ring connecting surface TM14.

In the ring movement step the transmission shaft S (more particularly the connecting side front surface S34) pushes the ring TM10 rearwards into the opening of the tool holder body TM2. Accordingly, the spring TM11 is pressed by the rear ring end surface TM15 towards the inner side surface of the radial hollow portion TM5 up until the gearings (S4 and TM3) slide axially along each other to be fully overlapping for intermeshing. In the final position of the ring, at the end of the ring movement step, the spring TM11 is contracted and the ring rear connection protrusion is pushed out of the blocking protrusion to be freely movable and being arranged in the radial hollow portion TM5 for allowing a rotation of the tool holder shaft TM1.

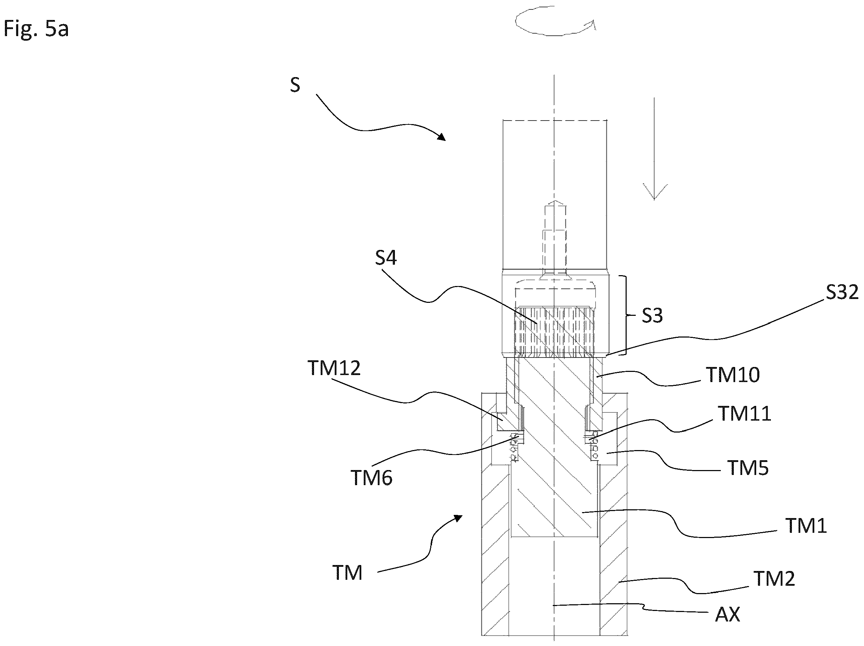

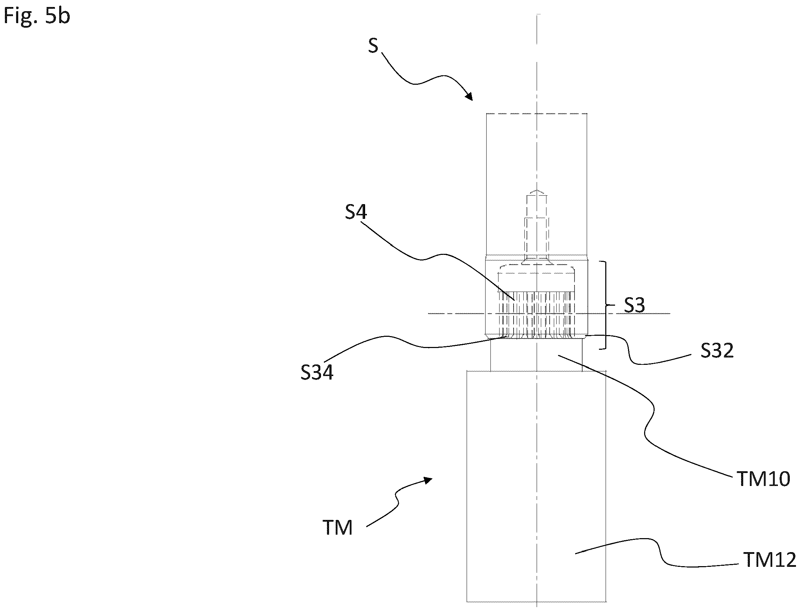

In figures 5a and 5b the tool holder TM and the transmission shaft S are shown in the coupled position (also referred to as interlocked position) in a side view and a cross section side view of the coupling parts. In the coupled position the tool holder gearing TM3 on the outer side surface of the tool holder shaft TM1 is fully intermeshing with the first gearing S4 (or internal gearing) of the transmission shaft S. Furthermore, a connecting side front surface S34 provided at the front end of the sleeve is pressed against the ring connection surface TM14. The ring TM10 is pushed rearwards along the connection axis AX by the connecting front surface S34 of the transmission shaft S up to a predetermined distance in which the ring rear connection protrusion TM12 in an axial direction, fully enters the radial hollow portion TM5 for being rotatable relative to the tool holder body TM2. The ring rear surface TM15 is pressed against the spring TM11. In the interlocked position the tool holder shaft TM1 rotates together with the transmission shaft S. At the same time also the ring TM10 rotates together with the tool holder shaft TM1. The tool holder body TM2, however, may be arranged so as not to rotate together with the rotating parts, i.e. the tool holder shaft, the ring and the transmission shaft when the ring rear connection protrusion TM12 is fully in the radial hollow portion TM5.

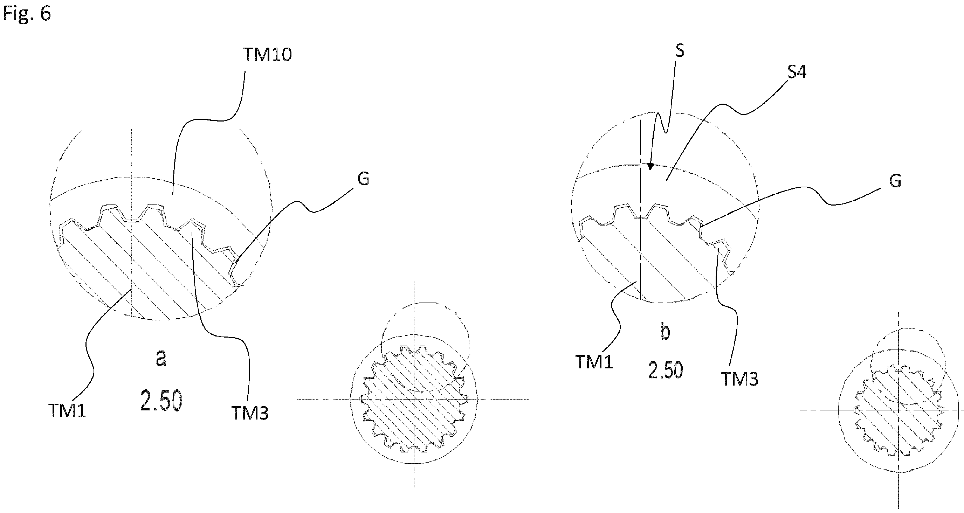

Figure 6 shows two sectional views of intermeshing gearings. On the left side in figure 6 there is shown the intermeshing gearing of the tool holder gearing TM3 with the gearing of the ring TM10, i.e. the ring gearing TM13. On the right side of figure 6 there is shown the intermeshing of the first gearing S4 with the tool holder gearing TM3. The views in figure 6 are cross section views of a plane which is perpendicular to the connection axis AX of the gearing connection section in the coupled state. As can be seen from figure 6, the tool holder gearing TM3 and the first gearing S4 are intermeshing and between adjacent surfaces of teeth a gap G (or tooth gap) between said side surfaces is present. Accordingly, also a gap at the intermeshing gears of the tool holder gearing TM3 and the ring gearing TM13 is present. The gaps G allows to smoothly slide the gearings into each other along the axial direction of the shaft such as to achieve the interlocked position and to allow removal of the tool holder from the tool holder interface. However, said gaps G lead to a reduced machining accuracy of the machine tool.

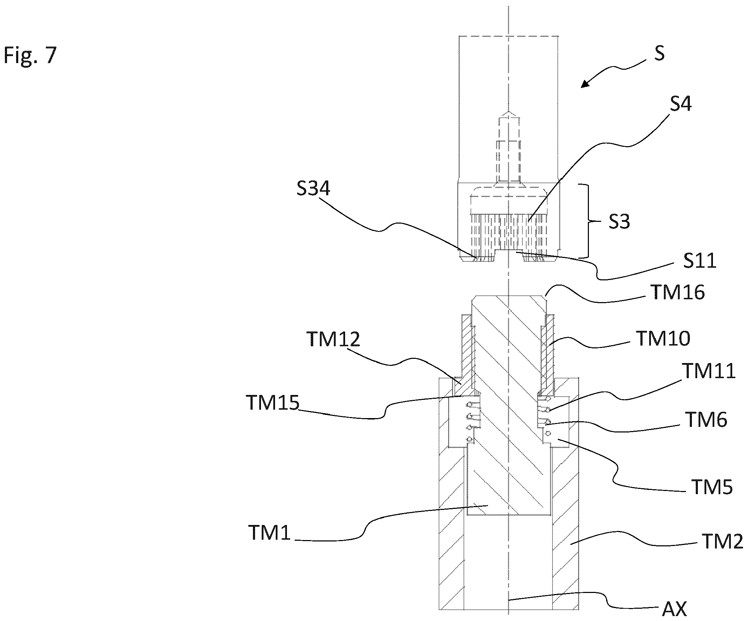

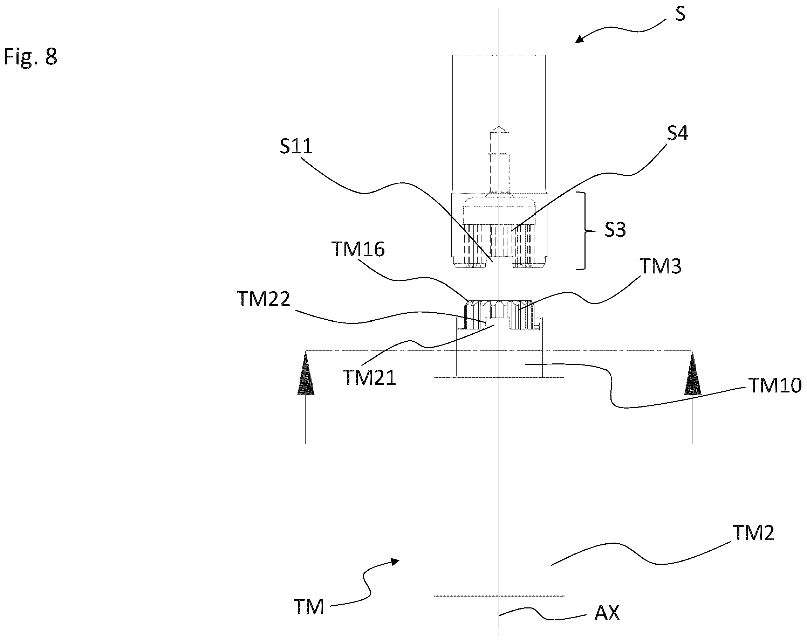

In a preferable development, as shown in figures 7 and 8, an optimized tool holder and transmission shaft can be provided. A cross section view of an embodiment of the present invention is shown in figures 7 and 8, wherein the (to be mounted) tool holder TM has in addition to the configurations described in relation to figures 1 to 6, an engaging element for achieving a rotation (preferably by generating at least a torque, resulting from an axial movement of the tool holder into the opening of the transmission shaft, to rotate the tool holder shaft relative to the ring TM10 and/or the transmission shaft) of the tool holder shaft gearing during the coupling process to remove at least one of the gearing gaps G, preferably both.

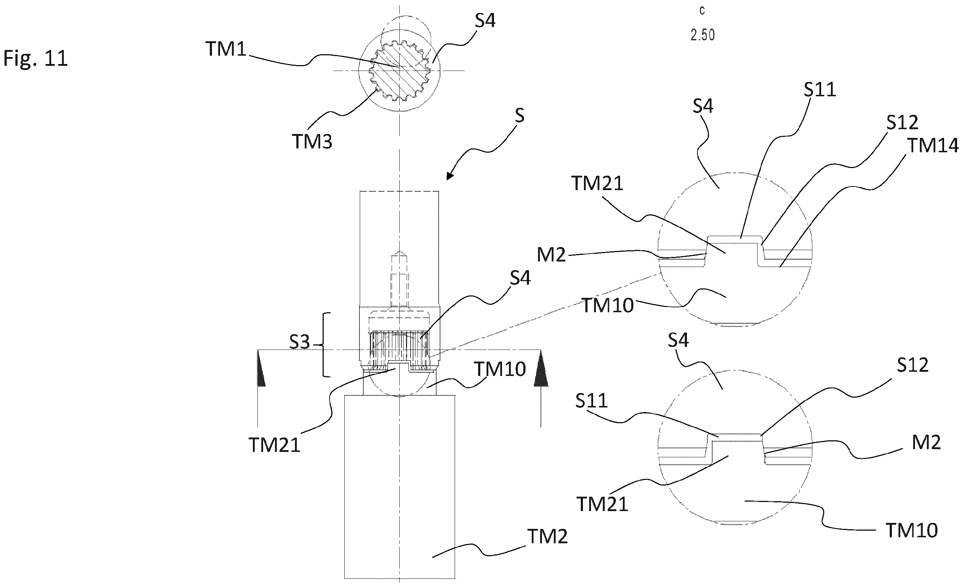

In particular, the ring TM10 has one or more protrusions, also designated as one or more front teeth TM21, at the front connection surface TM14. The front tooth TM21 is arranged at the circumferential side and extends from the ring connection surface TM14 in the axial direction AX away from the center of the ring TM10. The outer circumferential surface of the front tooth TM21 is planar (at the same level as) to the ring outer surface TM17. The front tooth preferably has a trapezoidal shape in the top view (which is the view on a plane which is perpendicular to the radial direction, the plane being preferably orthogonal to the outer circumferential surface of the front tooth TM21). Two side surfaces (front tooth side surface TM22) of said front tooth extend in the axial direction AX away from the front connection surface TM14 and are connected to each other by a third surface which is the front tooth top surface, arranged preferably perpendicular to the axis AX. One of these side surfaces is arranged rectangular to the third surface and the other side surface is arranged in an angle different than 90 degrees to said third surface, forming an inclined side surface of the front tooth TM21. This particular arrangement is also shown in the details shown in figure 11. The front tooth TM21 is configured to be inserted into the front slot S11 during the coupling process.

However, the front tooth TM21 can have a different shape, as long as there is an inclined surface (which preferably is a mating surface M2 or M1) either as a front tooth side surface or as a corresponding side surface of a slot for receiving the front tooth during coupling. The shape of the front tooth TM21 in the top view may also be a triangular shape, polygonal shape, or preferably a curved shape. During the coupling process the inclined surface (mating surface M2) contacts a corresponding surface (mating surface M1) of the opposing part, i.e. the transmission shaft, to thereby generate a force rotating the ring TM10 and the tool holder shaft relative to the transmission shaft such that the teeth of the corresponding gearings of the ring, the tool holder shaft and the transmission shaft connect to each other thereby removing any gap therebetween. In other words, the mating surfaces are arranged such that the contact plane of these surfaces is not parallel to the axial direction AX in order to be able to produce the radial force during the axial connection process.

Although a description is given in view of the front tooth being integrated on the ring TM10 and the front slot S11 being integrated at the transmission shaft S, it may also be possible the other way around, i.e. the front tooth being integrated on the connection side of the transmission shaft S and the ring having the corresponding front slot or slots for receiving said tooth or teeth.

The transmission shafts shown in the figures 7-8 is shown in the disconnected state and has a connecting side front surface S34 of the connection side section S3 of the transmission shaft S with more than one front slot S11. The front slots S11 may have a different shape - triangular, trapezoidal, polygonal or curved, as long as the mating surface of the front slot S11 can be connected with the corresponding mating surface of the front tooth TM21 of the tool holder TM.

During the coupling process of the transmission shaftS with the tool holder TM, the connecting side front surface S34 is pressed against the ring connection surface TM14. During the intermeshing connection of the between the front tooth TM21 and the front slot S11, the mating surface M1 (or inclined side surface) of the slot S11 slides along the mating surface M2 of the front tooth TM21 (inclined side surface of the front tooth TM21). Wherein such sliding movement leads to the small additional rotation transmitted to the first gearing S4 and the tool holder gearing TH3, which enable to press the intermeshing portions of the corresponding gears closer to each other.

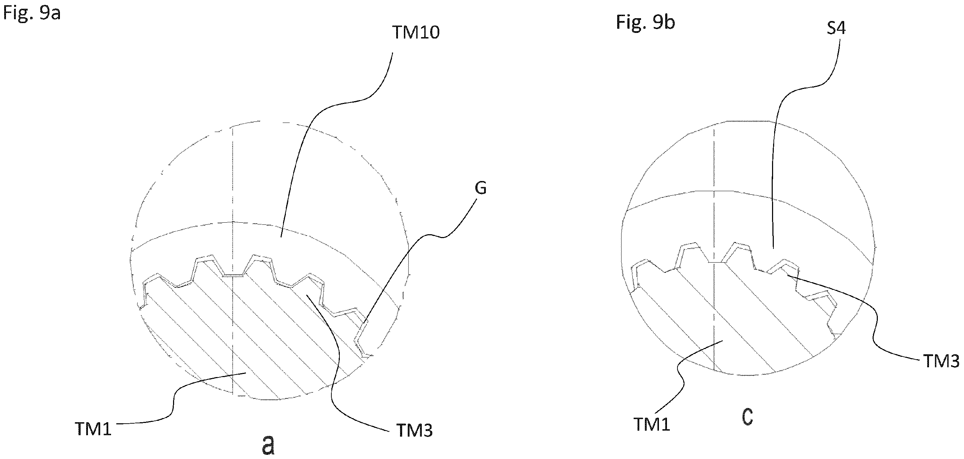

Accordingly, by having the mating surfaces arranged to achieve a radial force during the axial connection movement of the tool holder sliding into the opening of the sleeve, gaps of the intermeshing gearings can be reduced or even set to zero. In figure 9a and 9b respective configurations are shown wherein in figure 9b the teeth of the first gearing are moved towards the teeth of the tool holder gearing such that the gap between adjacent teeth on the teeth contact side depending on the rotation direction of the transmission shaft can be reduced to zero. In other words, since the torque is transmitted from the first gearing S4 to the tool holder gearing TM3, the side surface of a tooth of the first gearing S4 which is considered the front side surface in view of the rotation direction (advancing side surface of the tooth in rotating direction), is in contact with the corresponding side surface of the corresponding tooth of the toll holder gearing TM3, which is accordingly the rear side surface of the tooth of the tool holder gearing TM3. As clear from figure 9b, the rear side surface (trailing side surface of the tooth in rotating direction) is distanced from the corresponding surface of the other tooth, when the first gearing in figure 9b is rotating in the counter clockwise direction. The rotational force is therefore transmitted from the respective front side surfaces to the rear side surfaces of the teeth from the first gearing S4 to the tool holder gearing TM3.

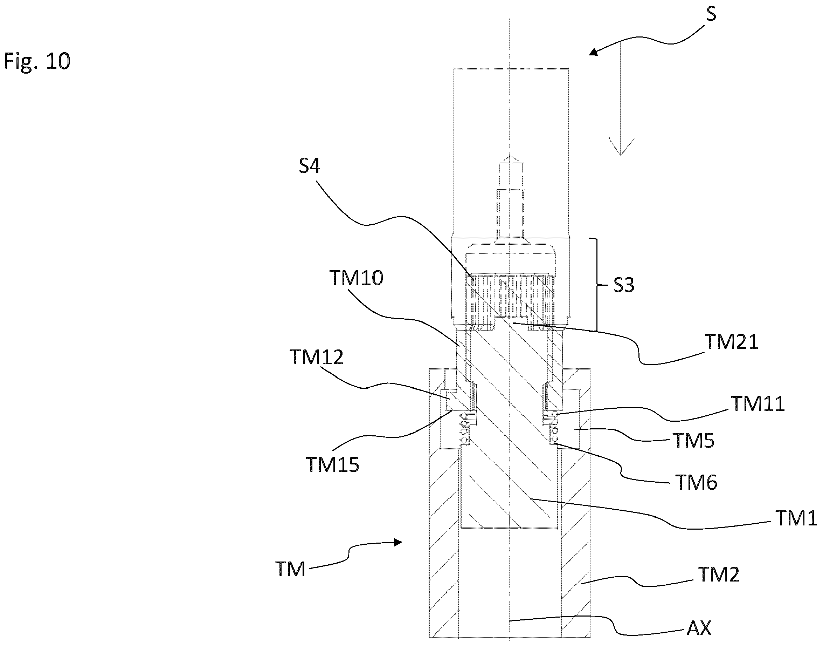

In figures 10 and 11 the tool holder TM and the transmission shaft S in the coupled position are shown in a side view and a cross section side view. As can be seen the front tooth TM21 is inserted into the front slot S11. Moreover, in figure 11 details of variants of the arrangement of the mating surfaces of the front tooth are shown.

For the coupling process, the spring TM11 is pressed by the rear ring end surface TM15 towards the inner side surface of the radial hollow portion TM5 up until the gearings (S4 and TM3) slide axially along each other to be fully overlapping for intermeshing. Since during the axial connection with the sliding movement also the tooth slides into the corresponding slot, the mating surfaces M1 and M2 contact each other and rotate the ring TM10 and/or tool holder shaft TM1, and/or the first gearing S4 such as to remove the related gaps of the gearings. In the final position of the ring, at the end of the ring movement step, the spring TM11 is contracted and the ring rear connection protrusion is pushed out of the blocking protrusion to be freely movable and being arranged in the radial hollow portion TM5 for allowing a rotation of the tool holder shaft TM 1.

In figure 11 details of the front tooth TM21 inserted in the front slot S11 are shown. In the upper detail, which is encircled by a dotted line, the mating surface M2 or inclined surface of the front tooth TM21 is provided at the left side of the tooth, which is accordingly one of the tool holder front tooth side surfaces TM22. In the shown embodiment the inner side surfaces of the front slot S11 are both inclined with respect to the axial direction along axis AX. Preferably the other side surface of the front tooth, i.e. the side opposing the inclined side surface of the front tooth TM21 is a side surface which extends perpendicular to the ring connection surface TM14, as shown in the upper detail. In the lower detail the inclined surface or mating surface M2 is arranged on the opposite side, which is at the right side in the figure. Accordingly, depending on the rotation direction of the shaft, the tooth can push the ring TM10 to rotate in the direction to be in line with the transmission shaft S, such as to remove the gap G of the intermeshing gearings. In a further preferred development both side surfaces of the front tooth TM21 are inclined, allowing to contact the side surface of the slot on both sides.

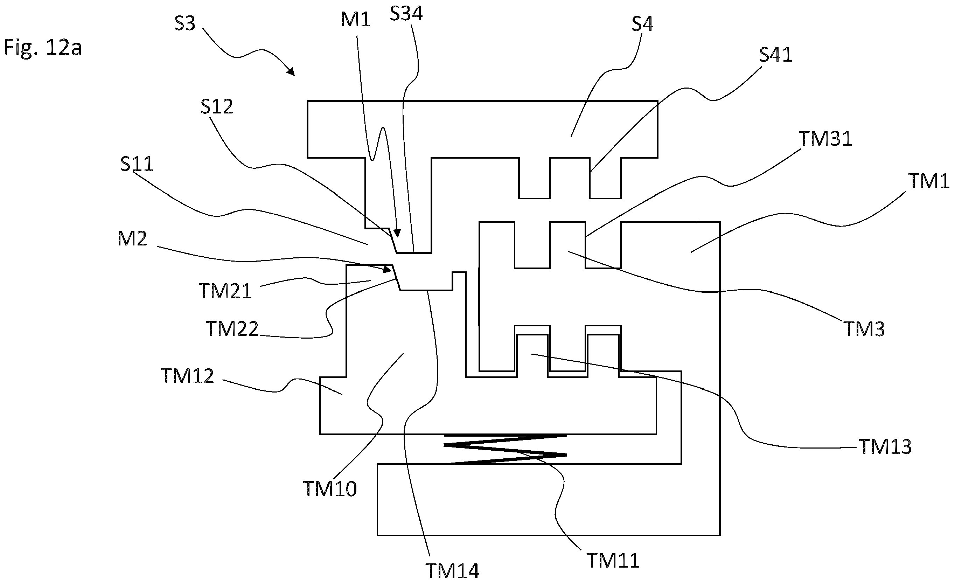

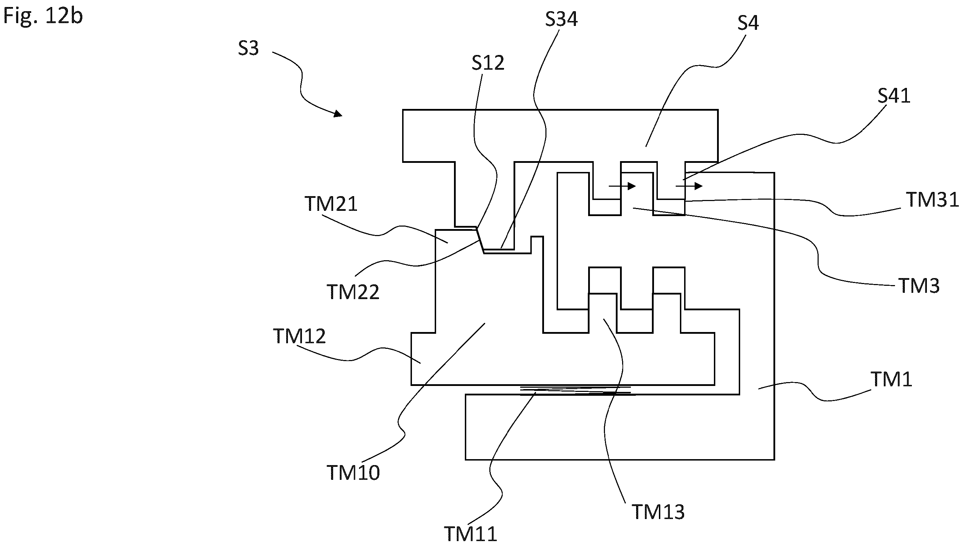

A schematic view of coupling the tool holder TH and the ring TH11 with the transmission shaft S is shown in figures 12a and 12b. In figure 12a the uncoupled state is shown and in figure 12b the coupled state is shown.

In figure 12a the first gearing S4 at the connection side section S3 of the transmission shaft S is shown distances from the tool holder gearing TM3 of the tool holder shaft TM1. More specifically, the first gearing side surface S41 is distances from the corresponding tool holder gearing side surface TM31. At the same time the transmission shaft mating surface M1, which is the mating surface arranged at the connecting side of the transmission shaft S at the slot S11, is also distanced from the corresponding ring mating surface M2, which is the mating surface arranged at the tool holder. In the preferred embodiment as shown in figure 12a both mating surfaces are inclined and preferably have the same inclination relative to the axial direction AX.

The front tooth TM21 has the front tooth side surface TM22 which is also the ring mating surface M2 in figure 12a. At the root of the front tooth TM21, the tooth is attached to the ring connecting surface TM14, which is opposite to the connecting side front surface S34 of the transmission shaft S. Moreover, the ring gearing TM13 is intermeshing with the corresponding gearing of the tool holder shaft TM1 and there may be a gap between these gearings. The spring TM11 is in the extended position in figure 12a so that the ring TM10 is arranged in the outward position.

In the coupled state the spring TM11 is compressed, as shown in figure 12b. Accordingly, the ring TM10 is pressed inward and the mating surfaces M1 and M2 contact each other. More specifically, the connecting side section S3 pressed the ring TM10 inward into the opening of the tool holder body TM2. Due to the inclined surfaces, i.e. the mating surfaces M1 and M2, the teeth of the first gearing S4 are moved in the right direction in figure 12b. In other words, due to the slight rotational movement of the transmission shaft around the axis AX, resulting from the sliding of the mating surfaces M1 and M2 (which are in the coupling step pushed in the axial direction closer to each other such that a resulting force at least partially in the radial direction results) along each other, the tooth flanks of the first gearing S4 contact or press against the tooth flanks of the tool holder gearing TM3 (see arrows in figure 12b) so that a gap between these gearings is reduced or even zero. At the same time, preferably also the gap between the ring gearing TM13 and the corresponding gearing of the tool holder shaft is strongly reduced or becomes zero.

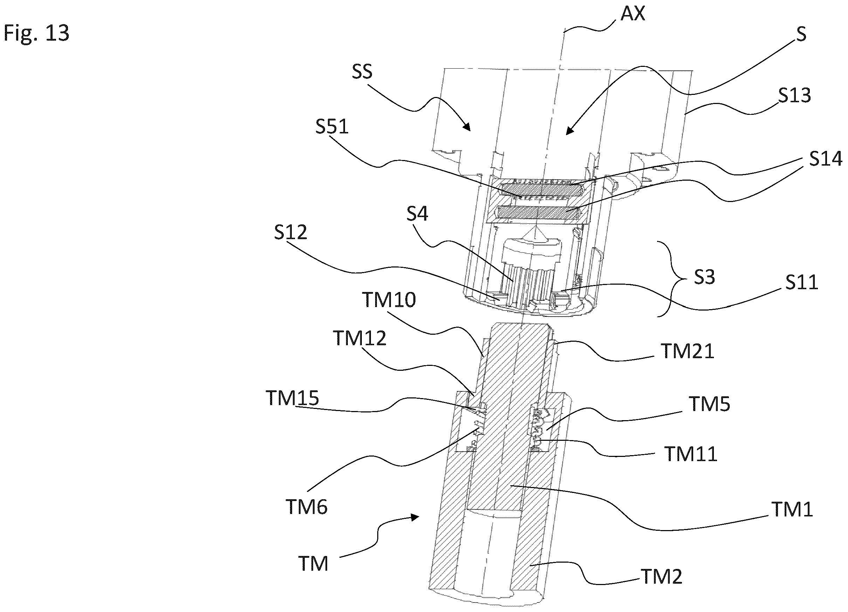

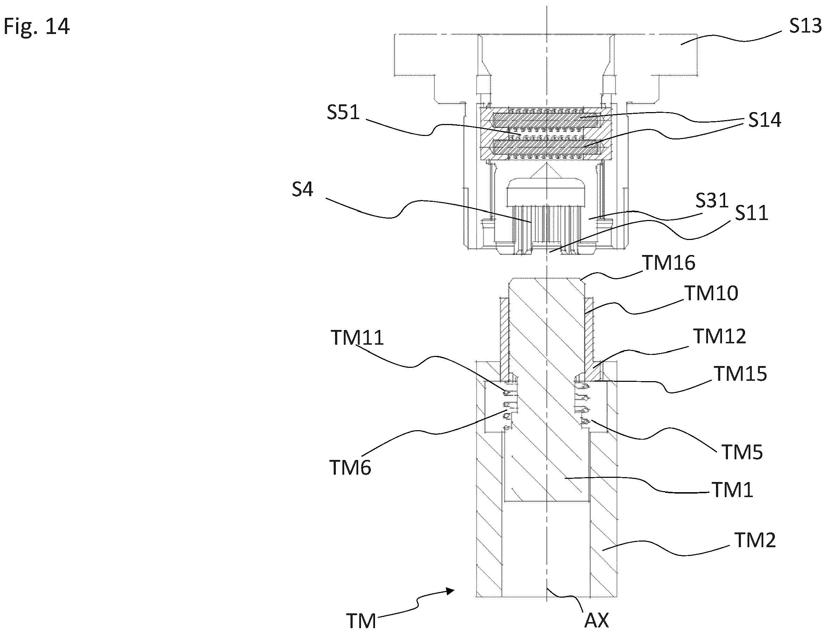

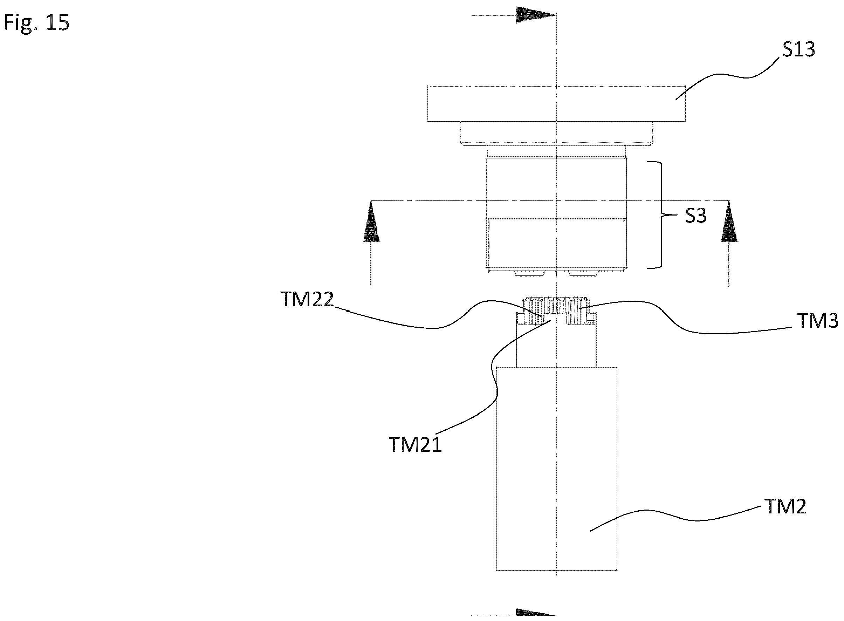

In figures 13 to 16 a further aspect of the described tool holder interface and tool holder is shown. In order to eliminate the gaps between the gearings, not only the transmission between the tool holder shaft and the transmission shaft may be considered, but also the transmission from the turret or milling unit to the transmission shaft S. Figures 13 and 14 show a cross sectional view of the tool holder TM to be inserted into the opening of the transmission shaft S, wherein opposing to the first gearing an arrangement of pins S14 is provided.

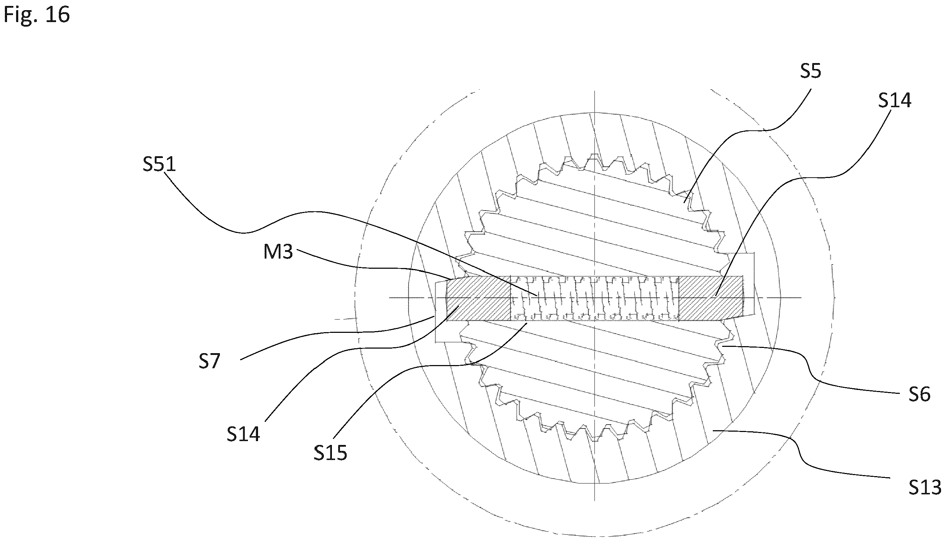

As shown in figure 13, the transmission shaft S is enclosed by the casing S13 which may act as the transmission part, for transmitting the torque from the drive unit to the transmission shaft S. the transmission shaft therefore has a second gearing S5 which is intermeshing with a drive unit side gearing S6, as shown in figure 16 in a torque receiving side section of the transmission shaft S. The shaft surrounding the transmission shaft S and connecting to the transmission shaft for torque transmission may also be a spindle shaft SS. In said area of the shaft there are two through holes S15 arranged perpendicular to the rotation axis of the transmission shaft, i.e. the axis AX. Preferably there are two holes, however, also one hole may be sufficient. As clear from the arrangement shown in figure 13 and 14, the transmission shaft is axially movable, i.e. movable along the axis AX.

In said through holes S15 respective pins S14 are arranged to be movable along the direction of the respective through hole up to a contact surface with the surrounding inner surface S7 of the casing S13 (spindle shaft SS), see figure 16. More particularly, in one through hole S15 there is provided a first pin and a second pin, arranged opposing to each other and preferrable distanced from each other and with a spring, the second spring S51 in-between. The second spring S51 is arranged to push the pins in the direction radially outward, preferably against the surrounding inner surface S7. Said pushing force, which pushes the pins S14 outwards from the through hole, can be increased in case the transmission shaft rotates around the axis AX and therefore exerts a centrifugal force onto the pins S14.

In order to remove the gap of intermeshing gearings S5 and S6, the pins have at least one inclined surface, inclined relative to the axial direction of the pin (or inclined relative to the axial direction of the through hole). The pins therefore have a tapered shape, at least at the tip portion thereof. Accordingly, due to the rotation of the shaft and the resulting centrifugal force, the gap between the intermeshing gears S5 and S6 becomes zero. The inclined surface of the pin may also be referred to as a mating surface M3 which contacts the corresponding inner surface of the surrounding inner surface S7, which is preferably also inclined. Preferably the mating surface M3 and the corresponding inner surface of the surrounding inner surface S7 are inclined with the same angle. In one preferred embodiment the pin has a cylindrical shape with a circular base surface and a middle surface extending orthogonal from the base surface to a tip surface. The middle surface has a straight side extending from the base surface to the tip and a side with a straight section and an inclined section, the straight section being closer to the base surface of the pin. The inclined surface (mating surface) corresponds to the inclined section of the middle surface of the pin.

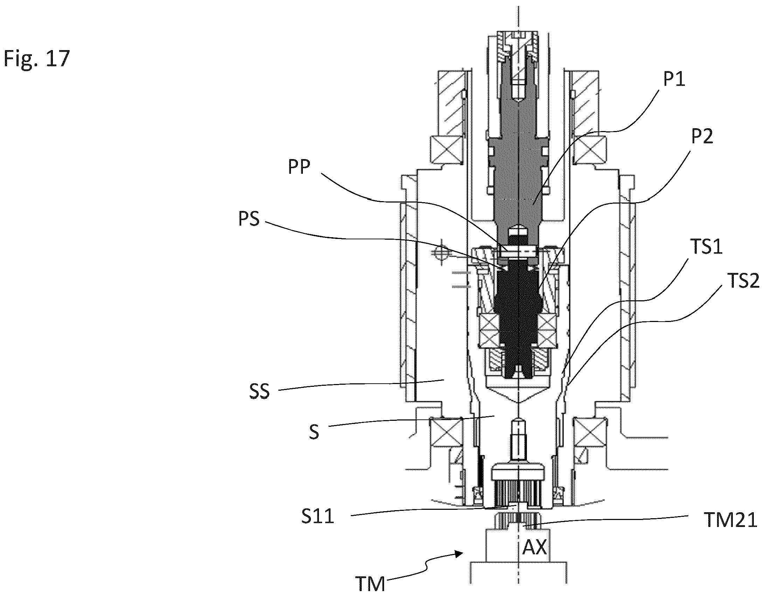

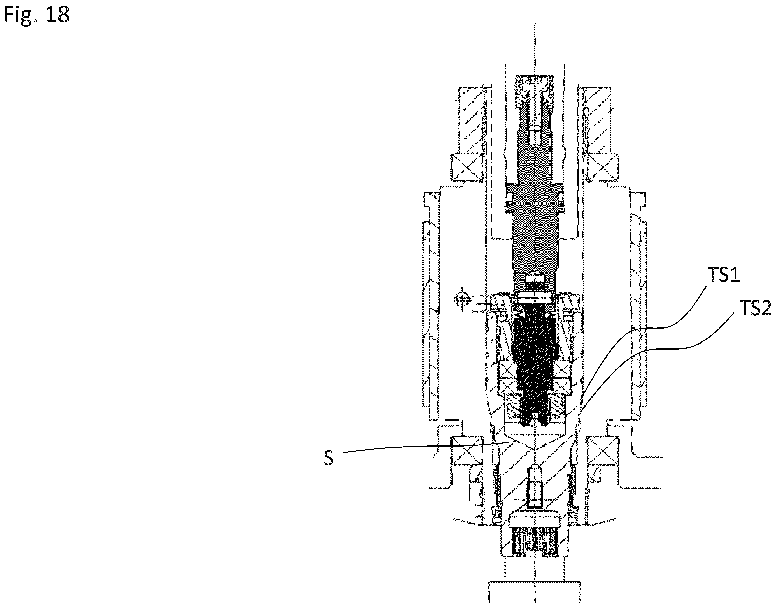

Figures 17 and 18 show an arrangement where the transmission shaft S is slidable in the axial direction by a first piston P1 interacting with a second piston P2. Torque is transmitted via friction contact surfaces. The shown arrangement can reduce a transmission gap in the coupled state between the spindle shaft, i.e. the outer circumferential shaft, and the transmission shaft which is axially movable. Preferably the torque transmission using friction at contacting surfaces is provided instead of the gearings S5 and S6. In a further development also a combination of both, gearings S5 and S6 and also friction contact surfaces may be possible. With the combination of the configuration of the front tooth TM21 and the corresponding front slot S11 together with the zero gap transmission on the torque receiving side of the transmission shaft, i.e. the through hole and pin arrangement or the friction surfaces, a very effective transmission of the torque from the spindle shaft to the tool holder shaft can be achieved.

Figure 17 shows the state when the transmission shaft is not coupled to the tool holder. Accordingly, there is a distance between the tool holder TM and the transmission shaft S, or more particularly the sleeve. The first piston P1 is movable in the axial direction, along axis AX. For the coupling step the transmission shaft S is pushed downwards to the tool holder TM such that the front tooth TM21 can engage with the front slot S11. Two axially movable pistons P1 and P2 are provided for pushing the transmission shaft S against the spindle shaft SS. The respective contact is achieved at the tapered surfaces TS1 and TS2 (friction contact surfaces). The first tapered surface TS1 is thereby a surface of the transmission shaft S and the second tapered surface is a surface of the spindle shaft SS. These surfaces can be contacted with each other such as to allow torque transmission by friction. Due to the friction contact and the torque transmission by friction, also a gap between the transmission shaft S and the spindle shaft SS can be avoided.

The coupled state is shown in figure 18. At the same time of contacting the tapered surfaces, the intermediate spring PS is contracted when a desired force is reached. As can be seen in figure 18, the axial position of the transmission shaft S is an extended state compared to the uncoupled state in figure 17. The sleeve of the transmission shaft is therefore extended in the axial direction, away from the spindle shaft, to engage with the tool holder TM.

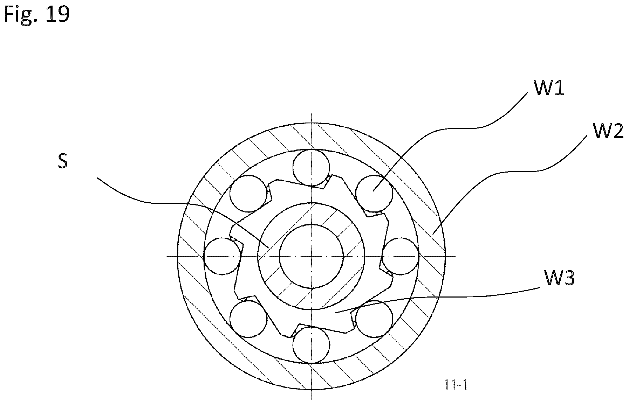

In figure 19 an example is shown of a zero gap torque transmission using free wheels, which may also be used in relation to the transmission shaft. More specifically, a pair of free wheels, allowing axial movement of the inner shaft may be provided wherein the freewheels may be arranged to block rotational movement of the shaft in one or both rotational directions around the axis AX.

The shown arrangement can reduce the gap between the spindle shaft, i.e. the outer circumferential shaft, and the transmission shaft which is axially movable.

Preferably the torque transmission using the freewheels is provided instead of the gearings S5 and S6. In a further development also a combination of both, gearings S5 and S6 and also the free wheels may be possible. Of course, there are many different configurations of freewheel mechanisms that would be suitable for the present application, namely blocking the rotation without incurring a gap and at the same time allowing axial movement of the inner shaft onto which the free wheel is arranged. In other words, an internal shaft rotates together with (i.e. depending on) the rotation of the external shaft, preferably without any rotation gap, and at the same time it can move in the axial direction in a sliding movement independently of the external shaft.

Specifically, a one-directional freewheel typically has a locking direction (or driving operation direction) and a freewheeling direction (or freewheeling operation direction). For example, if a one-directional freewheel has a clockwise locking direction, it has a counter-clockwise freewheeling direction, and vice versa. On the other hand, a two-directional (or bi-directional) freewheel is a mechanism in a transmission that disengages a driveshaft (e.g. the bar B / workpiece) from the driven element (e.g. the rotary guide-bush or in particular rotary guide-bush collet) when the driven element rotates at about equal rotational speed with substantially no torque being transmitted, and that engages the driveshaft with the driven element when the driven element rotates at about equal rotational speed with torque being transmitted. A simple two-directional (or bi-directional) freewheel assembly can be provided by providing two one-directional freewheels at opposite locking direction orientations.

As shown in figure 19, the free wheel has an external ring W2 which is fixed to a rotating external part, i.e. the spindle shaft SS. Moreover, a free wheel mechanism is provided allowing rotation in one direction and blocking rotation in the opposite direction. Moreover, axial movement of an inner shaft, onto which the inner ring is arranged, would be allowed. Such free wheels are also described in e.g. EP 3513906 A1 and EP 3513905 A1, the disclosure of which is incoorperated herewith by reference in it entirety. In the example shown in figure 19 the free wheel mechanism includes balls W1 and L-shaped cut out sections partially surrounding the balls W1, and contacting the balls on two points for exerting a force against the ball W1. The sections of the internal part, the inner ring W3, form a star like shape wherein between two adjacent teeth of said star shaped internal part, each time a separate ball W1 is provided. Due to the inclined base surface (which is the contact surface to the ball) of the intermediate section between two adjacent teeth the ball W1 is pressed against the external ring W2 when the inner ring would rotate in the counter clockwise direction and therefore rotation is blocked. On the other hand, rotation would be allowed in the clockwise direction in figure 19. If two of these free wheels with opposite blocking directions are arranged on the transmission shaft, the rotation of said shaft can be blocked while at the same time axial movement (sliding in axial direction) can be allowed, for example for the coupling process of the transmission shaft.

By exemplary embodiments as described above, there are proposed beneficial aspects and features to enhance the machining options of the turret unit and machine tool, specifically lathe, to provide a compact machine concept, allowing for more flexible, accurate, efficient and reliable machining operations, and/or to improve accuracy and/or stability of the machine tool.

While certain exemplary embodiments have been described and shown in the accompanying drawings, it is to be understood that such embodiments are merely illustrative of and are not restrictive on the scope of the invention, and that the embodiments of the invention are not limited to the specific constructions and arrangements shown and described, since various other changes, combinations, omissions, modifications and substitutions, in addition to those set forth in the above sections, are possible.

Those skilled in the art will appreciate that various adaptations, modifications, and/or combination of the just described embodiments can be configured without departing from the scope of disclosure of the present invention. Those skilled in the art will also appreciate, in view of this disclosure, that different embodiments of the invention described herein may be combined to form other embodiments of the invention. Therefore, it is to be understood that, the invention may be practiced other than as specifically described herein.

### Reference signs

- TM: - tool holder
- TM1: - tool holder shaft
- TM2: - tool holder body
- TM3: - tool holder gearing
- TM5: - radial hollow portion
- TM6: - shaft hollow portion
- TM10: - ring
- TM11: - spring
- TM12: - ring rear connection protrusion
- TM13: - ring gearing
- TM14: - ring connection surface
- TM15: - rear ring end surface
- TM16: - tool holder gearing chamfered portion
- TM17: - ring outer surface
- TM21: -front tooth
- TM22: - front tooth side surface
- TM31: - tool holder gearing side surface
- AX: - connection axis
- S: - transmission shaft
- S11: - front slot
- S12: - front slot slide surface
- S13: - casing
- S14: - pins
- S2: - torque receiving side section
- S21: - torque receiving side gearing
- S3: - connecting side section / sleeve
- S31: - sleeve outer surface
- S32: - chamfered outer sleeve surface
- S33: - sleeve inner surface
- S34: - connecting side front surface
- S35: - chamfered edge portion
- S4: - first gearing
- S41: - first gearing side surface
- S5: - second gearing
- S51: - second spring
- S6: - drive unit side gearing
- SS: - spindle shaft
- RS: - rear end section
- RS1: - rear end grove
- RS2: - rear end transitional part
- RS3: - transmission shaft rear opening
- RS4: - first circular ark hole
- RS5: - second circular ark hole
- RS6: - rear end inner side groove
- G: - gap
- P: - pin between pistons
- P1: - first piston
- P2: - second piston
- PS: - intermediate spring
- TS1: - first tapered surface
- TS2: - second tapered surface
- M1: - first mating surface
- M2: - second mating surface
- M3: - third mating surface

## Claims

1. Tool holder interface of a machine tool, in particular a lathe, the tool holder interface configured to mount a tool holder (TM) with a tool for machining operations, in particular a live tool, the tool holder interface including,
an interface body (IB) having at least one connecting slot (IS) for replaceably mounting a tool holder (TM) to the tool holder interface of the machine tool,
a transmission shaft (S) arranged at the connecting slot (IS), wherein the transmission shaft (S) is configured to transmit a drive torque to the mounted tool holder (TM),
wherein the transmission shaft (S) has a torque receiving-side section (S2) for receiving the drive torque and a connecting-side section (S3) for connecting to the mounted tool holder (TM),
wherein at the connecting-side section (S3) a first gearing (S4) for transmitting the drive torque to a corresponding tool holder gearing (TM3) of the mounted tool holder (TM) is provided and
wherein at the torque receiving-side section (S2) a contacting part is provided for receiving the drive torque of a drive unit of the machine tool,
wherein at the connecting-side section (S3) of the transmission shaft (S) at least one mating surface (M1) is provided and the mating surface (M1) is arranged to contact to a corresponding outer contact surface (M2) of the mounted tool holder (TM) for interacting with the tool holder (TM) to remove a gap between the first gearing (S4) and the corresponding tool holder gearing (TM3) of the mounted tool holder (TM).

2. The tool holder interface according to claim 1, wherein the tool holder interface is integrated as a tool turret of the machine tool.

3. The tool holder interface according to any of the preceding claims,
wherein at the connecting-side section (S3) the transmission shaft (S) has a front opening for inserting a tool holder shaft (TM1) of the tool holder (TM) in an axial direction, and
wherein the mating surface (M1) is axially inclined to contact to the corresponding outer contact surface (M2) of the tool holder (TM) for rotating the tool holder (TM) to remove a gap between the first gearing (S4) and the corresponding tool holder gearing (TM3) when inserting the tool holder shaft (TM1) along the axial direction.

4. The tool holder interface according to any of the preceding claims,
wherein the mating surface (M1) is inclined along an axial direction of the transmission shaft (S) such that an angle between the mating surface (M1) and the longitudinal axis of the transmission shaft (S) is between 0 and 90 degrees and
wherein the angle is preferably the inside angle between the mating surface (M1) and the axial direction of the transmission shaft (S).

5. The tool holder interface according to any of the preceding claims,
wherein the mating surface (M1) is a side surface of a slot (S11) or front tooth on an end surface of the transmission shaft (S) and
wherein preferably the slot (S11) or front tooth is arranged to extend at the circumference of the transmission shaft (S) to an outer surface of the transmission shaft (S).

6. The tool holder interface according to at least one of the preceding claims,
wherein the connecting-side section (S3) of the transmission shaft (S) has an opening on an outer end surface for receiving the tool holder shaft (TM1) and
wherein the receiving side section (S2) is spaced apart from the connecting side section (S3), and preferably arranged on an opposite side on the transmission shaft (S).

7. The tool holder interface according to at least one of the preceding claims,
wherein the connecting-side section (S3) is a hollow protrusion (S31) of the transmission shaft (S) having the opening for connecting to the tool holder shaft (TM1), and
wherein the hollow protrusion (S31) includes a front surface (S34) and an inner surface (S33) and on the inner surface (S33) the first gearing (S4) is provided.

8. The tool holder interface according to at least one of the preceding claims,
wherein at the torque receiving-side section (S2) at least one pin (S14) is arranged in a hole of the transmission shaft (S) and the pin (S14) is configured to move in the direction radially outside at least partially due to a centrifugal force in order to be pressed against a contact-surface of a transmission part of the tool turret when the transmission shaft (S) is rotating.

9. The tool holder interface according to at least one of the preceding claims,
wherein the pin (S14) is contacted to a spring for pressing the pin (S14) radially outward, the pin (S14) having an inclined surface along an axial direction of the pin (S14) and
wherein the inclined surface preferably is a surface for contacting a contact-surface of the transmission part of the tool turret.

10. The tool holder interface according to at least one of the preceding claims,
wherein the transmission shaft (S) is mounted to be movable along the axial direction and a torque receiving-surface of the torque receiving-side section (S2) is configured to be in friction contact with a corresponding surface of a tool turret part in an axially shifted state of the transmission shaft (S) in order to receive the drive torque from the drive unit of the machine tool.

11. Tool holder interface according to at least one of the preceding claims,
wherein the transmission shaft (S) is supported with a supporting part to be movable in the axial direction, the supporting part being a pair of freewheels, and
wherein each freewheel of the pair of freewheels has an inner ring and an outer ring concentric with the inner ring and a plurality of latching bodies between the rings, the latching bodies releasing the relative rotation between the inner and outer ring in a first rotation direction and provide form fit or friction fit in the other rotation direction to block the rotation.

12. A machine tool for machining workpieces, the machine tool comprising a tool holder interface according to at least one of the preceding claims.

13. A tool holder (TM) for a tool turret of a machine tool, in particular a lathe, wherein the tool holder (TM) is configured to mount a tool at a tool holder interface of the tool turret for machining operations, the tool holder (TM) including:
a tool holder shaft (TM1) to be arranged at a connecting-side section (S3) of the tool holder interface when mounted, wherein the tool holder shaft (TM1) is configured to receive a drive torque,
an axially movable ring (TM10) arranged at the tool holder shaft (TM1);
an elastic element at the rear end of the ring (TM10) for pressing the ring in an axially outward direction, the elastic element preferably being a spring (TM11);
wherein at the tool holder shaft (TM1) a tool holder gearing (TM3) for receiving the drive torque from a corresponding first gearing (S4) of the connecting-side section (S3) is provided and
wherein at a front section of the tool holder an outer contact surface (M2) is provided and the outer contact surface (M2) is arranged for contacting a mating surface (M1) of the connecting-side section for interacting with the transmission shaft (S) to remove a gap between the tool holder gearing (TM3) and the first gearing (S4), and preferably remove a gap of a gearing between the tool holder shaft (TM1) and the ring (TM10).

14. The tool holder (TM) according to claim 13,
wherein the outer contact surface (M2) is a surface of a front tooth (TM17) or a front slot of the ring (TM10) for connecting to a corresponding slot (S11) or a front tooth of the connecting-side section (S3) to interact with the transmission shaft (S) to remove a gap between the first gearing (S4) and the tool holder gearing (TM3).

15. The tool holder according to at least one of claims 13 or 14, wherein the ring (TM10) is arranged to surround the tool holder gearing (TM3) of the tool holder shaft (TM1), and
wherein the ring (TM3) is configured to be pressed against the elastic element when the tool holder shaft (TM1) is moved into an opening of the connecting-side section of the tool holder interface for mounting the tool holder, when the outer contact surface (M2) is moved against the mating surface (M1) of the connecting-side section.
